(19) Europäisches Patentamt
European Patent Office
Office européen des brevets

(11) **EP 4 678 037 A1**

(12) **EUROPEAN PATENT APPLICATION**
published in accordance with Art. 153(4) EPC

(43) Date of publication:
**14.01.2026 Bulletin 2026/03**

(51) International Patent Classification (IPC):
***A24F 40/46*** (2020.01)    ***A24F 40/40*** (2020.01)

(21) Application number: **24769755.0**

(22) Date of filing: **29.02.2024**

(52) Cooperative Patent Classification (CPC):
**A24F 40/40; A24F 40/42; A24F 40/46; A24F 40/48; A24F 40/50; A24F 40/53**

(86) International application number:
**PCT/CN2024/079260**

(87) International publication number:
**WO 2024/188061 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **10.03.2023 CN 202310255155**

(71) Applicant: **Shenzhen First Union Technology Co., Ltd.**
**Shenzhen, Guangdong 518000 (CN)**

(72) Inventors:
• **ZHANG, Xiaoming**
  **Shenzhen, Guangdong 518000 (CN)**
• **XU, Zhongli**
  **Shenzhen, Guangdong 518000 (CN)**
• **LI, Yonghai**
  **Shenzhen, Guangdong 518000 (CN)**

(74) Representative: **Proi World Intellectual Property GmbH**
**Obermattweg 12**
**6052 Hergiswil, Kanton Nidwalden (CH)**

(54) **ELECTRONIC ATOMIZATION APPARATUS AND CONTROL METHOD THEREFOR**

(57) An electronic atomization apparatus and a control method therefor. The electronic atomization apparatus comprises a heating element (14) for heating and atomizing an aerosol forming substrate, wherein the heating element (14) has a reference resistance value. The control method comprises: upon acquiring a start signal of an electronic atomization apparatus being vaped, measuring the current resistance value of a heating element (14); comparing the current resistance value of the heating element (14) with a reference resistance value; and according to the numerical relationship between the current resistance value of the heating element (14) and the reference resistance value, determining whether to update the reference resistance value. In the apparatus and method, the reference resistance value of the heating element (14) is updated according to the numerical relationship between the measured resistance value of the heating element (14) and the reference resistance value of the heating element (14), which is conducive to measuring the temperature of the heating element (14) at high precision or indicating an adverse condition at the heating element (14), thereby improving the vaping experience of a user.

FIG. 5

**Description**

**CROSS-REFERENCE TO RELATED APPLICATIONS**

This application claims priority to Chinese Patent Application No. 202310255155.9, filed with China National Intellectual Property Administration on March 10, 2023 and entitled "ELECTRONIC ATOMIZATION APPARATUS AND CONTROL METHOD THEREFOR", which is incorporated herein by reference in its entirety.

**TECHNICAL FIELD**

This application relates to the field of electronic atomization technologies, and in particular, to an electronic atomization apparatus and a control method therefor.

**BACKGROUND**

An electronic atomization apparatus heats and atomizes an aerosol-forming substrate, for example, e-liquid, to generate an aerosol for a user to inhale. A heating element in the electronic atomization apparatus is usually made of a material having a temperature coefficient of resistance (TCR). The TCR represents a relative change of a resistance value of a resistance when a temperature changes by 1 degree centigrade. When an initial temperature, an initial resistance value (a reference resistance value), and a current resistance value are known, a current temperature can be deduced based on a formula corresponding to the TCR. This is conducive to temperature control of the electronic atomization apparatus. Alternatively, based on the initial resistance value, an abnormal change of a resistance value of the heating element may be detected, thereby indicating an adverse condition at the heating element. The adverse condition may be, for example, a level of exhaustion of the aerosol-forming substrate in the electronic atomization apparatus.

However, as use time of the electronic atomization apparatus increases, the initial resistance value of the heating element also changes, and initial resistance values of different atomizers are also different. If a default initial resistance value is still used to perform the temperature control or indicate the adverse condition, an aerosol inhaling experience of the user may be affected.

**SUMMARY**

This application provides an electronic atomization apparatus and a control method therefor, to resolve a problem that a change of an initial resistance value is not conducive to control of the electronic atomization apparatus.

An aspect of this application provides a control method for an electronic atomization apparatus, where the electronic atomization apparatus includes a heating element configured to heat and atomize an aerosol-forming substrate, the heating element has a reference resistance value, and the method includes:

detecting, when obtaining a start signal indicating that the electronic atomization apparatus is inhaled, a current resistance value of the heating element;

comparing the current resistance value of the heating element with the reference resistance value; and

determining, based on a size relationship between the current resistance value of the heating element and the reference resistance value, whether to update the reference resistance value.

An aspect of this application provides a control method for an electronic atomization apparatus, where the electronic atomization apparatus includes a heating element configured to heat and atomize an aerosol-forming substrate and a power supply providing electric power to the heating element; the heating element has a reference resistance value; and the method includes:

detecting, when obtaining a start signal indicating that the electronic atomization apparatus is inhaled, a current resistance value of the heating element;

comparing the current resistance value of the heating element with the reference resistance value;

when the current resistance value of the heating element is less than the reference resistance value, updating the reference resistance value to the current resistance value of the heating element; and

controlling the power supply to provide electric power to the heating element, and determining, based on the updated reference resistance value during operation of the heating element, a temperature of the heating element.

Another aspect of this application provides an electronic atomization apparatus, including:

a heating element, configured to heat and atomize an aerosol-forming substrate to generate an aerosol; and

a circuit, configured to: detect, when obtaining a start signal indicating that the electronic atomization apparatus is inhaled, a current resistance value of the heating element; compare the current resistance value of the heating element with a reference resistance value; and determine, based on a size relationship between the current resistance value of the heating element and the reference resistance value, whether to update the reference resistance value.

In the foregoing electronic atomization apparatus and the control method therefor, the reference resistance value of the heating element is updated based on the size relationship between the detected resistance value of the heating element and the reference resistance value of the heating element. This is conducive to precisely detecting the temperature of the heating element or indicating an adverse condition at the heating element, thereby improving inhaling experience of a user.

## BRIEF DESCRIPTION OF THE DRAWINGS

The objective implementation, functional features and advantages of this application are further illustrated with reference to the accompanying drawings by using the embodiments. One or more embodiments are exemplarily described with reference to the corresponding figures in the accompanying drawings, and the exemplary descriptions do not constitute a limitation to the embodiments. Components in the accompanying drawings that have same reference numerals are represented as similar components, and unless otherwise particularly stated, the figures in the accompanying drawings are not drawn to scale.

FIG. 1 is a schematic diagram of an electronic atomization apparatus according to an embodiment of this application;

FIG. 2 is a schematic diagram of another electronic atomization apparatus according to an embodiment of this application;

FIG. 3 is a schematic diagram of a first detection circuit according to an embodiment of this application;

FIG. 4 is a schematic diagram of another first detection circuit according to an embodiment of this application;

FIG. 5 is a schematic diagram of a control method for an electronic atomization apparatus according to an embodiment of this application;

FIG. 6 is a schematic diagram of another control method for an electronic atomization apparatus according to an embodiment of this application;

FIG. 7 is a schematic diagram of a control process of an electronic atomization apparatus according to an embodiment of this application;

FIG. 8 is a schematic diagram of another control process for an electronic atomization apparatus according to an embodiment of this application; and

FIG. 9 is a schematic diagram of an update process of a flag bit according to an embodiment of this application.

## DETAILED DESCRIPTION

It should be understood that specific embodiments described herein are merely used for explaining this application, and are not used for limiting this application. For ease of understanding of this application, this application is described in further detail below with reference to the accompanying drawings and specific embodiments. It should be noted that, when an element is expressed as "being fixed to" another element, the element may be directly on the another element, or one or more intermediate elements may exist between the element and the another element. When a component is expressed as "being connected to" another component, the component may be directly connected to the another component, or one or more intermediate components may exist between the component and the another component. The terms "upper", "lower", "left", "right", "inside", "outside" and similar expressions used in this specification are merely used for an illustrative purpose.

Unless otherwise defined, meanings of all technical and scientific terms used in this specification are the same as those usually understood by a person skilled in art of this application. Terms used in this specification of this application are merely intended to describe objectives of the specific implementations, and are not intended to limit this application. The term "and/or" used in this specification includes any or all combinations of one or more related listed items.

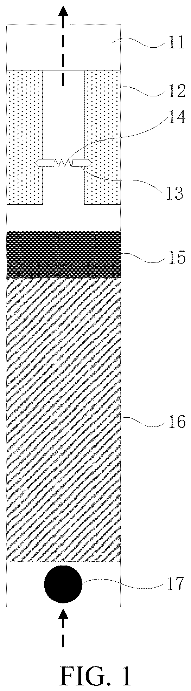

FIG. 1 is a schematic diagram of an electronic atomization apparatus according to an embodiment of this application.

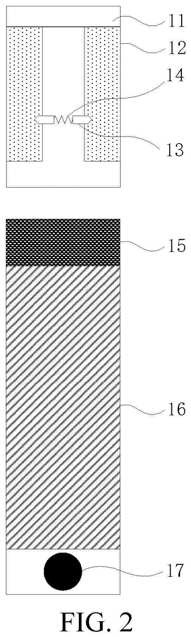

As shown in FIG. 1, the electronic atomization apparatus includes a suction nozzle 11, a liquid storage unit 12, a liquid transfer unit 13, a heating element 14, a circuit 15, a power supply 16, and an inhaling detector 17. In the example in FIG. 1, the foregoing components are integrally formed, and the electronic atomization apparatus is a general conjoined apparatus. In another example, as shown in FIG. 2, an electronic atomization apparatus includes an atomizer and a power supply component detachably connected to the atomizer. Alternatively, the atomizer is usually referred to as a cartridge, and the power supply component is usually referred to as a tube. The circuit 15, the power supply 16, and the inhaling detector 17 are located in the power supply component. The suction nozzle 11, the liquid storage unit 12, the liquid transfer unit 13, and the heating element 14 are located in the atomizer.

The suction nozzle 11 is configured to be used by a user to inhale an aerosol generated by heating.

The liquid storage unit 12 is configured to store a liquid aerosol-forming substrate that can generate the aerosol. The liquid aerosol-forming substrate may be liquid including a tobaccocontaining material that contains a volatile tobacco aroma component, or may be liquid containing a non-tobacco material. For example, the liquid aerosol-forming substrate may include water, solvent, ethanol, plant extract, spice, a flavoring agent, or a vitamin mixture. The spice may include menthol, peppermint, spearmint oil, various fruity aroma components, and the like, but is not limited thereto. The flavoring agent may include components that can provide a plurality of fragrances or flavors to a user. The vitamin mixture may be a material mixing at least one of vitamin A, vitamin B, vitamin C, and vitamin E, but is not limited thereto. In addition, the liquid aerosol-forming substrate may include an aerosol-forming agent, for example, glycerin and propylene glycol.

The liquid transfer unit 13 can transfer the liquid aerosol-forming substrate stored in the liquid storage unit 12 to the heating element 14. For example, the liquid transfer unit 13 may be a cotton fiber, a ceramic fiber, a glass fiber, or a porous material such as a porous ceramic or a porous glass, but is not limited thereto.

The heating element 14 is a component configured to heat the liquid aerosol-forming substrate transferred by the liquid transfer unit 13. For example, the heating element 14 may be a metal wire, a metal plate, or a ceramic heater, but is not limited thereto. In addition, the heating element 14 may be formed by an electrically conductive heating wire like a nichrome wire, and may be arranged in a structure of being wrapped around the liquid transfer unit 13. The heating element 14 may be heated by a current supply, and transfers heat to the liquid aerosol-forming substrate, which is in contact with the heating element 14, to heat the liquid aerosol-forming substrate, and to generate an aerosol. In this example, the heating element 14 uses a material with a feature of a suitable resistance temperature coefficient, for example, stainless steel 316, titanium, nickel, and nichrome.

The circuit 15 may control an overall operation of the electronic atomization apparatus. Specifically, the circuit 15 controls operations of the power supply 16 and the heating element 14, and controls operations of another element in the electronic atomization apparatus. In addition, the circuit 15 may determine, by checking a state of a component of the electronic atomization apparatus, whether the electronic atomization apparatus can perform an operation. For example, the circuit 15 includes a first detection circuit configured to detect a resistance value of the heating element 14, and a second detection circuit configured to detect whether the atomizer is connected to the power supply component.

The circuit 15 includes at least one processor. The processor may include a logic gate array, or may include a combination of a general-purpose microprocessor and a memory that stores programs executable in the microprocessor. In addition, a person skilled in the art should understand that the circuit 15 may include hardware of another type.

The power supply 16 provides electric power for operating the electronic atomization apparatus. For example, the power supply 16 may provide electric power to heat the heating element 14, and may provide electric power required for operating the circuit 15. In addition, the power supply 16 may provide electric power required for operating a sensor, a motor, and the like that are provided in the electronic atomization apparatus.

The power supply 16 may be, but is not limited to, a lithium iron phosphate (LiFePO4) battery. For example, the power supply 16 may be a lithium cobaltate (LiCoO2) battery or a lithium titanate battery. The power supply 16 may be a rechargeable battery or a disposable battery.

The inhaling detector 17 is configured to detect an inhaling action of a user and generate a corresponding electrical signal, that is, detect whether the electronic atomization apparatus is inhaled, to make the circuit 15, for example, the processor, control operations of the power supply 16, the heating element 14, and the like based on the electrical signal, for example, control the power supply 16 to provide electric power to the heating element 14, to make the heating element 14 heat and atomize the liquid aerosol-forming substrate. The inhaling detector 17 may use a common pressure sensor, a differential pressure sensor, an airflow sensor, and the like.

An air inlet hole is arranged at a position of the electronic atomization apparatus adjacent to the inhaling detector 17. When the electronic atomization apparatus is inhaled, an airflow enters through the air inlet hole, flows through the suction nozzle 17, the power supply 16, the circuit 15, the heating element 14, and the like, and flows out through the suction nozzle 11. A dashed-line arrow in the figure roughly shows a path of the airflow.

It should be noted that FIG. 1 merely shows components related to this embodiment. A person of ordinary skill in the art should understand that the electronic atomization apparatus may further include other common components in addition to the components shown in FIG. 1.

It should be further noted that, in another example, the electronic atomization apparatus is configured to heat a solid aerosol-forming substrate to generate an aerosol. For example, the solid aerosol-forming substrate may be a product including tobacco or a plant fiber. In some examples, the electronic atomization apparatus is a so-called heat-not-burn smoking apparatus.

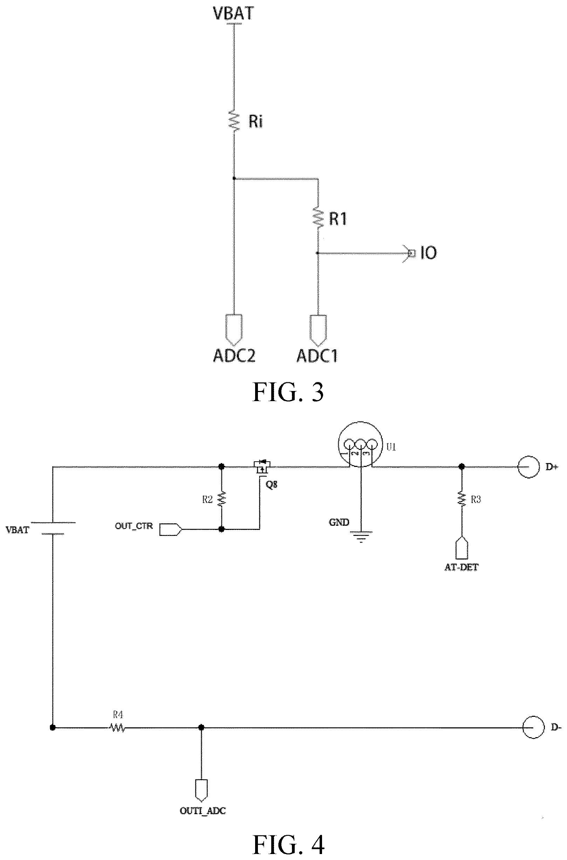

FIG. 3 is a schematic diagram of a first detection circuit according to an embodiment of this application.

As shown in FIG. 3, Ri is a heating element 14, and R1 is a sampling resistance. The heating element 14 and the sampling resistance R1 are connected in series between a power supply 16 (represented by VBAT in the figure) and a port IO of a processor. A port ADC1 of the processor is connected to one end of the sampling resistance R1, and a port ADC2 of the processor is connected to another end of the sampling resistance R1.

When a resistance value of the heating element 14 needs to be detected, a low level is outputted through the port IO, then the processor obtains a voltage $V_{ADC1}$ through the port ADC1, obtains a voltage $V_{ADC2}$ through the port ADC2, and then the resistance value of the heating element 14 can be obtained through the following formula:

$$Ri = \frac{(V_{BAT} - V_{ADC2}) \times R1}{(V_{ADC2} - V_{ADC1})}$$

FIG. 4 is a schematic diagram of another first detection circuit according to an embodiment of this application.

As shown in FIG. 4, a circuit 15 includes a switch tube Q8, a heating element 14 (arranged at D+ and D- ends in the figure), and a sampling resistance R4 that are sequentially connected in series between a positive electrode and a negative electrode of a power supply 16 (represented by VBAT in the figure), and U1 is an inhaling detector 17. A control end of the switch tube Q8 is connected to a port OUT_CTR of a processor, and the switch tube Q8 may be controlled to be turned on or turned off by using the port OUT_CTR. A port AT-DET of the processor is arranged between the switch tube Q8 and the heating element 14, and a port OUT1-ADC of the processor is arranged between the heating element 14 and the sampling resistance R4.

When the inhaling detector 17 detects inhaling, the processor controls the switch tube Q8 to be turned on by using the port OUT_CTR, then the processor obtains a voltage $V_{AT-DET}$ by using the port AT-DET, obtains a voltage $V_{OUT1-ADC}$ by using the port OUT1-ADC, and then a resistance value of the heating element 14 can be obtained through the following formula:

$$Ri = \frac{V_{AT-DET} \times R4}{V_{OUT1-ADC}} - R4$$

It may be understood that the first detection circuit is not limited to the situations shown in FIG. 2 and FIG. 3. For example, in another example, the first detection circuit may be implemented by using a switch tube connected in series with the sampling resistance R1, and this is also feasible. For this, refer to situations shown in FIG. 2 to FIG. 4 in document CN113349472A.

Based on the foregoing circuit, in an example, the processor is configured to: detect, when obtaining a start signal indicating that the electronic atomization apparatus is inhaled, a current resistance value of the heating element; compare the current resistance value of the heating element with the reference resistance value; and determine, based on a size relationship between the current resistance value of the heating element and the reference resistance value, whether to update the reference resistance value.

In this example, if the current resistance value of the heating element 14 detected by the first detection circuit is less than the reference resistance value of the heating element 14, the reference resistance value of the heating element 14 is updated to the current resistance value of the heating element 14 detected by the first detection circuit. Otherwise, update processing is not performed (that is, the reference resistance value remains unchanged), and another action continues to be performed, for example, the power supply 16 is controlled to provide electric power to the heating element 14, to make the heating element 14 heat and atomize the aerosol-forming substrate.

In an example, the processor is configured to determine, based on a preset flag bit, whether to forcibly update the reference resistance value. If the reference resistance value needs to be forcibly updated, the reference resistance value is updated to the detected current resistance value of the heating element.

In this example, the processor determines, based on the preset flag bit, whether to forcibly update the reference resistance value of the heating element. Timing is started when the electronic atomization apparatus enters a standby state. If timing duration reaches a first preset time threshold, the preset flag bit is updated by the processor. Generally, the first preset time threshold ranges from 1 to 15 minutes, preferably from 1 to 12 minutes, further preferably from 2 to 12 minutes, further preferably from 4 to 12 minutes, further preferably from 6 to 12 minutes, and further preferably from 8 to 12 minutes. In a specific example, the first preset time threshold may be 10 minutes. When continuous duration for which the heating element is in a non-operating state reaches a second preset time threshold, the electronic atomization apparatus is controlled to enter the standby state by the processor. The second preset time threshold ranges from 3 to 15 seconds, preferably from 3 to 12 seconds, further preferably from 3 to 10 seconds, further preferably from 3 to 8 seconds, and further preferably from 3 to 6 seconds.

In the foregoing example, after the processor updates the reference resistance value of the heating element 14 to the current resistance value of the heating element 14 detected by the first detection circuit, the processor can determine, based on the updated reference resistance value of the heating element 14, a temperature of the heating element 14 or whether an adverse condition exists.

For example, the temperature of the heating element 14 is determined based on the following formula: $TCR = (R2 - R1)/(R1 * (T2 - T1)) = (R2 - R1)/(R1 * \Delta T)$, where TCR represents a resistance temperature coefficient, T1 represents an initial temperature of the heating element 14, T2 represents a target temperature to which the heating element 14 is expected to heat, R1 is a resistance value, that is, an initial resistance value, of the heating element 14 when the temperature is T1, and R2 is a resistance value of the heating element 14 when the temperature is T2. TCR and T1 are known, R1 is the updated reference resistance value of the heating element 14, R2 may be obtained by detection by using the first detection circuit, and T2 may be calculated based on TCR, T1, R1, and R2.

For another example, a resistance change is determined by using the following formula: $\Delta R = R2 - R1$, where R1 is the updated reference resistance value of the heating element 14, and R2 may be obtained by detection by using the first detection circuit. ΔR is compared with a maximum preset threshold ΔRmax, to determine whether the resistance change indicates an unacceptably fast temperature increase. Certainly, ΔR may be compared with a maximum preset threshold ΔRmin, to determine an adverse condition corresponding to an unauthorized atomizer existing in the electronic atomization apparatus.

In an example, the processor is configured to initialize, when detecting through the second detection circuit that the atomizer is connected to the power supply component, the reference resistance value of the heating element to a preset resistance value.

In this example, the initialized preset resistance value is preferably greater than the maximum resistance value of the heating element 14 in the electronic atomization apparatus. For example, in an electronic atomization apparatus configured to heat and atomize a liquid aerosol-forming substrate, a corresponding resistance value of a heating element 14 (that is, a resistance value of the heating element 14 at room temperature), generally ranges from 0.5 Ω to 2 Ω. Therefore, the initialized preset resistance value may be greater than 2 Ω, for example, 2.5 Ω or 3 Ω. Certainly, if storage allows, the value may be set to a larger value, and this is feasible.

In an example, the processor is configured to control the power supply to stop providing electric power to the heating element, and continue to perform steps of detecting a resistance value of the heating element when it is detected again within a third preset time threshold that the electronic atomization apparatus is inhaled.

In this example, for the third preset time threshold, refer to setting of the second preset time threshold. The step of detecting a current resistance value of the heating element continues to be performed. In other words, after the current resistance value of the heating element is detected, whether to update the reference resistance value of the heating element is determined based on a size relationship between the re-detected current resistance value of the heating element and the reference resistance value of the heating element.

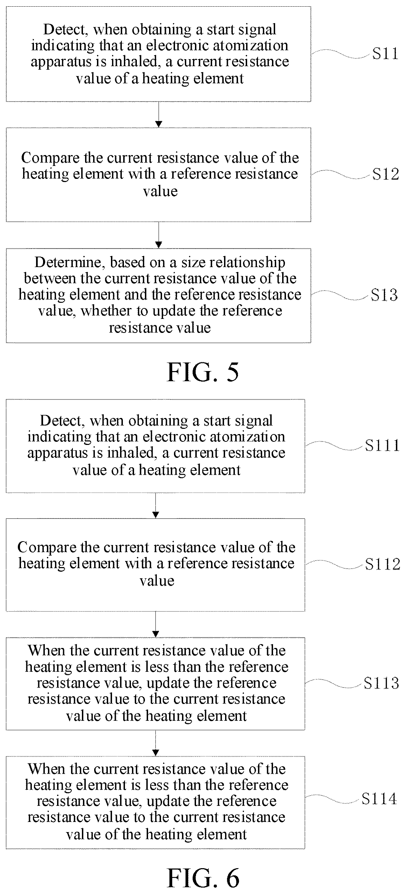

FIG. 5 is a schematic diagram of a control method for an electronic atomization apparatus according to an embodiment of this application. The method specifically includes the following steps:

Step S11: Detect, when obtaining a start signal indicating that the electronic atomization apparatus is inhaled, a current resistance value of the heating element.
Step S12: Compare the current resistance value of the heating element with the reference resistance value.
Step S13: Determine, based on a size relationship between the current resistance value of the heating element and the reference resistance value, whether to update the reference resistance value.

In an example, the control method further includes:

detecting whether the atomizer is connected to the power supply component; and
initializing, when detecting that the atomizer is connected to the power supply component, the reference resistance value of the heating element to a preset resistance value.

In an example, the control method further includes:

determining, based on a preset flag bit, whether to forcibly update the reference resistance value; and
if the reference resistance value needs to be forcibly updated, updating the reference resistance value to the detected current resistance value of the heating element.

In an example, timing is started when the electronic atomization apparatus enters a standby state. If timing duration reaches a first preset time threshold, the preset flag bit is updated.

In an example, when continuous duration for which the heating element is in a non-operating state reaches a second preset time threshold, the electronic atomization apparatus is controlled to enter the standby state.

In an example, the control method further includes:

if the current resistance value of the heating element is less than the reference resistance value, updating the reference resistance value to the current resistance value of the heating element.

In an example, the control method further includes:

If the current resistance value of the heating element is not less than the reference resistance value, the reference resistance value is remained unchanged.

In an example, the control method further includes:

controlling the power supply to provide electric power to the heating element, to make the heating element heat and atomize the aerosol-forming substrate, and determining, based on the updated reference resistance value during operation of the heating element, whether an adverse condition exists.

In an example, a temperature of the heating element is calculated based on the updated reference resistance value, to determine whether the adverse condition exists.

In an example, updating the reference resistance value is performed when the heating element is in the non-operating state.

In an example, the control method further includes:

controlling the power supply to stop providing electric power to the heating element; and
continuing to perform the step of detecting a resistance value of the heating element when it is detected again within a third preset time threshold that the electronic atomization apparatus is inhaled.

It should be noted that, for parameters involved in the foregoing method examples, for example, the first preset time threshold to the third preset time threshold, refer to the foregoing descriptions, and for a specific implementation process, refer to the foregoing descriptions.

FIG. 6 is a schematic diagram of another control method for an electronic atomization apparatus according to an embodiment of this application. The method specifically includes the following steps:

Step S111: Detect, when obtaining a start signal indicating that the electronic atomization apparatus is inhaled, a current resistance value of the heating element.
Step S112: Compare the current resistance value of the heating element with the reference resistance value.
Step S113: When the current resistance value of the heating element is less than the reference resistance value, update the reference resistance value to the current resistance value of the heating element.
Step S114: Control the power supply to provide electric power to the heating element, and determine, based on the updated reference resistance value during operation of the heating element, a temperature of the heating element.

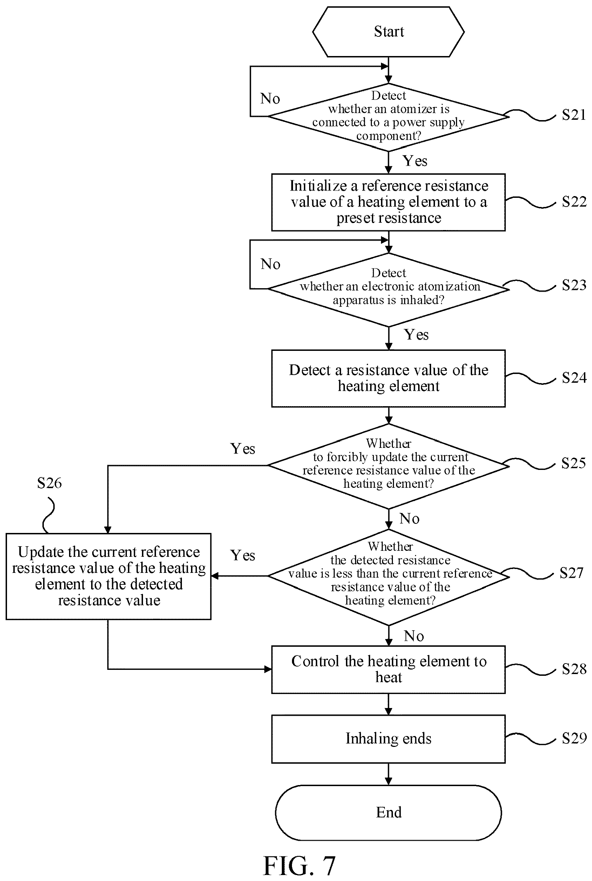

FIG. 7 is a schematic diagram of a control process of an electronic atomization apparatus according to an embodiment of this application. The control process is described with reference to the example in FIG. 2, and specifically includes:

Step S21: Detect whether the atomizer is connected to the power supply component.

If the processor detects, through the second detection circuit, that the atomizer is connected to the power supply component, perform step S22; otherwise, continue to detect whether the atomizer is connected to the power supply component.

Step S22: Initialize the reference resistance value of the heating element to a preset resistance.

For example, the processor initializes, after detecting through the second detection circuit that the atomizer is connected to the power supply component, the reference resistance value of the heating element to 3 Ω.

Step S23: Detect whether the electronic atomization apparatus is inhaled.

If the processor detects through the inhaling detector that the electronic atomization apparatus is inhaled, perform step S24; otherwise, continue to detect whether the electronic atomization apparatus is inhaled.

Step S24: Detect a resistance value of the heating element.

Step S25: Determine whether to forcibly update the reference resistance value of the heating element.

The processor determines, based on the preset flag bit, whether to forcibly update the reference resistance value of the heating element. For example, when the flag bit is 1, forcibly update the reference resistance value of the heating element, that is, perform step S26 to update the reference resistance value of the heating element (which is the resistance value initialized in step S22 in this case) to the resistance value of the heating element that is detected in step S24. After step S26 is performed, perform step S28, to be specific, the processor controls the heating element to start to heat until inhaling ends (step S29). It may be understood that, at a moment when the inhaling ends or a moment before the inhaling ends, the processor may control the power supply to stop providing electric power to the heating element. When the flag bit is 0, perform step S27.

Step S27: Determine whether the resistance value detected in foregoing step S24 is less than the reference resistance value of the heating element. If the detected resistance value is less than the reference resistance value of the heating element, perform step S26, to be specific, update the reference resistance value of the heating element (the reference resistance value of the heating element is the resistance value initialized in step S22 in this case) to the resistance value of the heating element detected in step S24. After step S26 is performed, perform step S28. If the detected resistance value is not less than the reference resistance value of the heating element, perform step S28, to be specific, the processor keeps the reference resistance value (the resistance value initialized in step S22) of the heating element unchanged, and controls the heating element to start to heat until the inhaling ends (step S29).

It should be noted that step S25 and step S27 may be performed in a non-sequential order. For example, step S27 may be performed first, then step S25 is performed.

It should be noted that, before step S28 is performed, the processor may further detect whether an abnormality exists in the electronic atomization apparatus. If an abnormality exists, the processor does not control the heating element to start to heat, and sends warning information; and if no abnormality exists, the processor controls the heating element to start to heat.

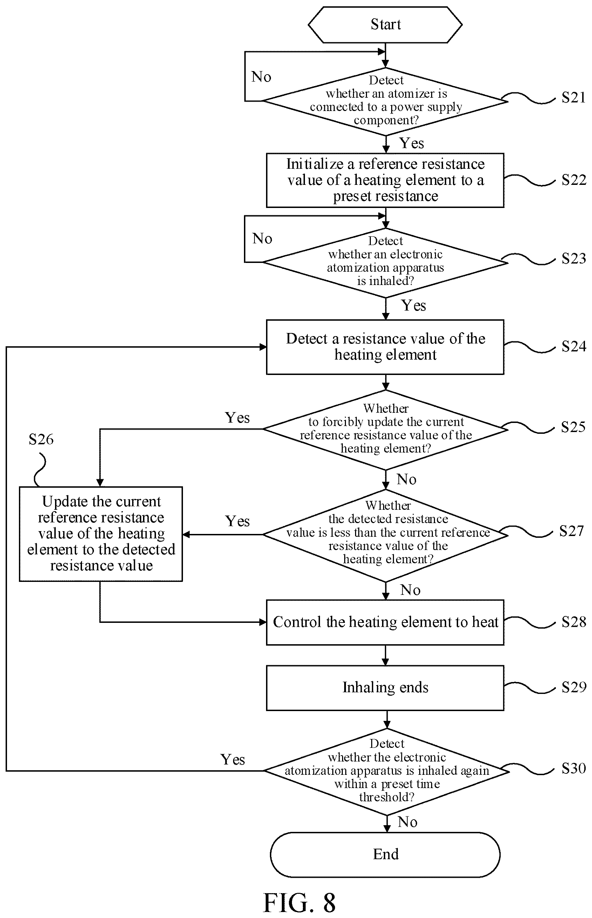

FIG. 8 is a schematic diagram of another control process for an electronic atomization apparatus according to an embodiment of this application. Different from the example in FIG. 7, the method further includes the following step:

Step S30: The processor determines whether it is detected again that the electronic atomization apparatus is inhaled within a preset time threshold. After previous inhaling is completed, if it is detected again during a time interval of the preset time threshold that the electronic atomization apparatus is inhaled, perform step S24, to be specific, detect the resistance value of the heating element again; otherwise, the control process ends.

It should be noted that, in this example, the preset time threshold may be set by a user. For example, the second preset time threshold ranges from 3 to 15 seconds, preferably from 3 to 12 seconds, further preferably from 3 to 10 seconds, further preferably from 3 to 8 seconds, and further preferably from 3 to 6 seconds.

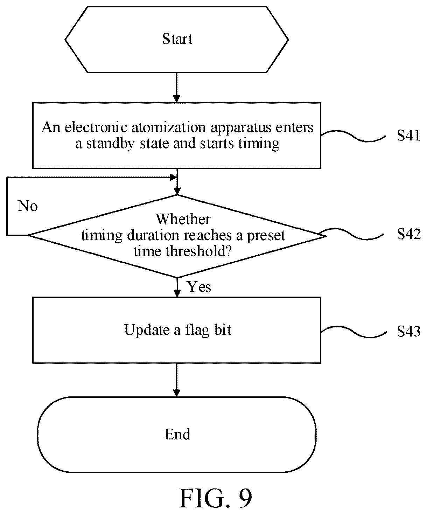

FIG. 9 is a schematic diagram of an update process of a flag bit according to an embodiment of this application. Steps specifically include:

Step S41: The electronic atomization apparatus enters a standby state and starts timing;

In this step, the processor may control, based on a condition that the electronic atomization apparatus is not inhaled within the preset time threshold, the electronic atomization apparatus to enter the standby state. In this example, for the preset time threshold, refer to setting in FIG. 7. When the electronic atomization apparatus enters the standby state, a timer is controlled to start timing. The timer may be a component integrated into the processor, or may be a component independent of the processor.

Step S42: Whether timing duration reaches the preset time threshold. In this step, the preset time threshold ranges from 1 to 15 minutes, and may be specifically 3 minutes, 5 minutes, 8 minutes, 10 minutes, or the like. If the timing duration reaches the preset time threshold, step S43 is performed. Otherwise, the step of timing and determining whether the timing duration reaches the preset time threshold continues to be performed.

Step S43: Update a flag bit. In this step, for example, the flag bit may be updated to 1.

It should be noted that the specification of this application and the accompanying drawings thereof illustrate preferred embodiments of this application. However, this application may be implemented in various different forms, and is not limited to the embodiments described in this specification. These embodiments are not intended to be an additional limitation on the content of this application, and are described for the purpose of providing a more thorough and comprehensive understanding of the content disclosed in this application. Moreover, the above technical features may further be combined to form various embodiments not listed above, and all such embodiments shall be construed as falling within the scope of the specification of this application. Further, a person of ordinary skill in the art may make improvements and variations according to the above descriptions, and such improvements and variations shall all fall within the protection scope of the appended claims of this application.

**Claims**

1. A control method for an electronic atomization apparatus, wherein the electronic atomization apparatus comprises a heating element configured to heat and atomize an aerosol-forming substrate, the heating element has a reference resistance value; and the method comprises:

   detecting, when obtaining a start signal indicating that the electronic atomization apparatus is inhaled, a current resistance value of the heating element;
   comparing the current resistance value of the heating element with the reference resistance value; and
   determining, based on a size relationship between the current resistance value of the heating element and the reference resistance value, whether to update the reference resistance value.

2. The control method according to claim 1, wherein the electronic atomization apparatus comprises an atomizer and a power supply component detachably connected to the atomizer; the heating element is located in the atomizer, and the atomizer comprises a liquid aerosol-forming substrate; and
the control method further comprises:

detecting whether the atomizer is connected to the power supply component; and
initializing, when detecting that the atomizer is connected to the power supply component, the reference resistance value of the heating element to a preset resistance value.

3. The control method according to claim 1, wherein the control method further comprises:

determining, based on a preset flag bit, whether to forcibly update the reference resistance value; and
if the reference resistance value needs to be forcibly updated, updating the reference resistance value to the detected current resistance value of the heating element.

4. The control method according to claim 3, wherein timing is started when the electronic atomization apparatus enters a standby state; and if timing duration reaches a first preset time threshold, the preset flag bit is updated.

5. The control method according to claim 4, wherein the first preset time threshold ranges from 1 to 15 minutes.

6. The control method according to claim 4, wherein when continuous duration for which the heating element is in a non-operating state reaches a second preset time threshold, the electronic atomization apparatus is controlled to enter the standby state.

7. The control method according to claim 6, wherein the second preset time threshold ranges from 3 to 15 seconds.

8. The control method according to claim 1, wherein the control method further comprises:
if the current resistance value of the heating element is less than the reference resistance value, updating the reference resistance value to the current resistance value of the heating element.

9. The control method according to claim 8, wherein if the current resistance value of the heating element is not less than the reference resistance value, the reference resistance value remains unchanged.

10. The control method according to claim 1, wherein the electronic atomization apparatus further comprises a power supply configured to provide electric power to the heating element, and the control method further comprises:
controlling the power supply to provide electric power to the heating element, to make the heating element heat and atomize the aerosol-forming substrate, and determining, based on the updated reference resistance value during operation of the heating element, whether an adverse condition exists.

11. The control method according to claim 10, wherein a temperature of the heating element is calculated based on the updated reference resistance value, to determine whether the adverse condition exists.

12. The control method according to claim 1, wherein updating the reference resistance value is performed when the heating element is in the non-operating state.

13. A control method for an electronic atomization apparatus, wherein the electronic atomization apparatus comprises a heating element configured to heat and atomize an aerosol-forming substrate and a power supply providing electric power to the heating element; the heating element has a reference resistance value; and the method comprises:

detecting, when obtaining a start signal indicating that the electronic atomization apparatus is inhaled, a current resistance value of the heating element;
comparing the current resistance value of the heating element with the reference resistance value;
when the current resistance value of the heating element is less than the reference resistance value, updating the reference resistance value to the current resistance value of the heating element; and
controlling the power supply to provide electric power to the heating element, and determining, based on the updated reference resistance value during operation of the heating element, a temperature of the heating element.

14. An electronic atomization apparatus, comprising:

a heating element, configured to heat and atomize an aerosol-forming substrate to generate an aerosol; and a circuit, configured to: detect, when obtaining a start signal indicating that the electronic atomization apparatus is inhaled, a current resistance value of the heating element; compare the current resistance value of the heating element with a reference resistance value; and determine, based on a size relationship between the current resistance value of the heating element and the reference resistance value, whether to update the reference resistance value.

FIG. 1

FIG. 2

FIG. 3

FIG. 4

Detect, when obtaining a start signal indicating that an electronic atomization apparatus is inhaled, a current resistance value of a heating element
~ S11

Compare the current resistance value of the heating element with a reference resistance value
~ S12

Determine, based on a size relationship between the current resistance value of the heating element and the reference resistance value, whether to update the reference resistance value
~ S13

## FIG. 5

Detect, when obtaining a start signal indicating that an electronic atomization apparatus is inhaled, a current resistance value of a heating element
~ S111

Compare the current resistance value of the heating element with a reference resistance value
~ S112

When the current resistance value of the heating element is less than the reference resistance value, update the reference resistance value to the current resistance value of the heating element
~ S113

When the current resistance value of the heating element is less than the reference resistance value, update the reference resistance value to the current resistance value of the heating element
~ S114

## FIG. 6

**Start**

Detect whether an atomizer is connected to a power supply component? — S21
No (loop back)
Yes ↓

Initialize a reference resistance value of a heating element to a preset resistance — S22

Detect whether an electronic atomization apparatus is inhaled? — S23
No (loop back)
Yes ↓

Detect a resistance value of the heating element — S24

Whether to forcibly update the current reference resistance value of the heating element? — S25
Yes →
No ↓

S26
Update the current reference resistance value of the heating element to the detected resistance value

Whether the detected resistance value is less than the current reference resistance value of the heating element? — S27
Yes →
No ↓

Control the heating element to heat — S28

Inhaling ends — S29

**End**

FIG. 7

EP 4 678 037 A1

Start

Detect whether an atomizer is connected to a power supply component? — S21
- No (loops back)
- Yes ↓

Initialize a reference resistance value of a heating element to a preset resistance — S22

Detect whether an electronic atomization apparatus is inhaled? — S23
- No (loops back)
- Yes ↓

Detect a resistance value of the heating element — S24

Whether to forcibly update the current reference resistance value of the heating element? — S25
- Yes →
- No ↓

S26

Update the current reference resistance value of the heating element to the detected resistance value

Whether the detected resistance value is less than the current reference resistance value of the heating element? — S27
- Yes →
- No ↓

Control the heating element to heat — S28

Inhaling ends — S29

Detect whether the electronic atomization apparatus is inhaled again within a preset time threshold? — S30
- Yes (loops back)
- No ↓

End

FIG. 8

Start

An electronic atomization apparatus enters
a standby state and starts timing — S41

No

Whether
timing duration reaches a preset
time threshold? — S42

Yes

Update a flag bit — S43

End

FIG. 9

# EP 4 678 037 A1

## INTERNATIONAL SEARCH REPORT

| International application No. |
|---|
| **PCT/CN2024/079260** |

### A. CLASSIFICATION OF SUBJECT MATTER

A24F40/46(2020.01)i; A24F40/40(2020.01)i

According to International Patent Classification (IPC) or to both national classification and IPC

### B. FIELDS SEARCHED

Minimum documentation searched (classification system followed by classification symbols)

IPC:A24F

Documentation searched other than minimum documentation to the extent that such documents are included in the fields searched

Electronic data base consulted during the international search (name of data base and, where practicable, search terms used)

CNTXT, ENTXTC, VEN: 气溶胶, 加热, 电阻, 阻值, 实测, 实际, 当前, 基准, 初始, 参考, 更新, 更改, 变更, 温度, aerosol, heater, resistance, reference, initial, base, temperature, actual, measurement, renew, change, alter

### C. DOCUMENTS CONSIDERED TO BE RELEVANT

| Category* | Citation of document, with indication, where appropriate, of the relevant passages | Relevant to claim No. |
|---|---|---|
| X | CN 115568642 A (ALD GROUP LTD.) 06 January 2023 (2023-01-06) description, paragraphs 32-59, and figures 1-5 | 1-14 |
| X | US 2021274850 A1 (JAPAN TOBACCO INC.) 09 September 2021 (2021-09-09) description, paragraphs 39-90, and figures 1-6 | 1-14 |
| PX | KR 20230055898 A (KT & G CORP.) 26 April 2023 (2023-04-26) description, paragraphs 289-313, and figures 1-32 | 1-14 |
| A | CN 114468380 A (SHENZHEN FIRST UNION TECHNOLOGY CO., LTD.) 13 May 2022 (2022-05-13) entire document | 1-14 |
| A | CN 114158789 A (SHENZHEN SMOORE TECHNOLOGY LTD.) 11 March 2022 (2022-03-11) entire document | 1-14 |

☐ Further documents are listed in the continuation of Box C.    ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **10 June 2024** | **11 June 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/079260**

| Patent document cited in search report | | | Publication date (day/month/year) | Patent family member(s) | | | Publication date (day/month/year) |
|---|---|---|---|---|---|---|---|
| CN | 115568642 | A | 06 January 2023 | None | | | |
| US | 2021274850 | A1 | 09 September 2021 | EP | 3874975 | A1 | 08 September 2021 |
| | | | | EP | 3874975 | B1 | 25 October 2023 |
| | | | | JP | 6855611 | B1 | 07 April 2021 |
| | | | | JP | 2021136939 | A | 16 September 2021 |
| | | | | US | 11963555 | B2 | 23 April 2024 |
| KR | 20230055898 | A | 26 April 2023 | None | | | |
| CN | 114468380 | A | 13 May 2022 | None | | | |
| CN | 114158789 | A | 11 March 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310255155

- CN 113349472 A